# EUROPEAN PATENT APPLICATION

(11) **EP 4 629 203 A1**
(43) Date of publication of application: **08.10.2025**
(21) Application number: 23905305.1
(22) Date of filing: 30.08.2023
(51) Int. Cl.: G07C 9/00

(54) **SMART VEHICLE KEY CONTROL METHOD AND SYSTEM, AND SMART VEHICLE KEY AND NON-TRANSITORY COMPUTER-READABLE STORAGE MEDIUM**

(30) Priority: 23.12.2022 CN 202211661359
(71) Applicant: Guangzhou Automobile Group Co. Ltd., Guangzhou, Guangdong 510030 (CN)
(72) Inventor: YANG, Tuchao, Guangzhou, Guangdong 511434 (CN); ZHANG, Mengjie, Guangzhou, Guangdong 511434 (CN); LAI, Ruifu, Guangzhou, Guangdong 511434 (CN); CHEN, Wenqing, Guangzhou, Guangdong 511434 (CN)
(74) Representative: Zaboliene, Reda
(86) International application number: PCT/CN2023/115954
(87) International publication number: WO 2024/131127

(57) **Abstract**

A smart vehicle key control method and system, and a smart vehicle key and a non-transitory computer-readable storage medium. The control method comprises: detecting the positional relationship between a smart key and a vehicle; if the smart key is outside a preset range of the vehicle, the smart key setting an operation mode to a life companion mode; if the smart key is within the preset range of the vehicle, then detecting a passenger compartment region in which the smart key is located; and the smart key setting the operation mode to a driving companion mode according to the detected passenger compartment region in which the smart key is located. The method breaks through functional limitations of a traditional vehicle key. A function switch is provided on a smart key, such that the number of switches of a vehicle itself can be reduced, and the flexibility and universality of use are also achieved. The smart key can be bound to a new vehicle offline after a user changes the vehicle, thereby solving the problem of a traditional vehicle-mounted voice assistant being inextricably bound to a vehicle.

## Description

The present application claims the priority of the Chinese invention patent application with the invention name " vehicle smart key control method and system, smart vehicle key and non-transitory computer-readable storage medium" submitted to the China Patent Office on December 23, 2022, application No. 202211661359.4, and the entire content of which is hereby incorporated by reference.

### TECHNICAL FIELD

The present application relates to the technical field of intelligent networked vehicles, and more specifically relates to a vehicle smart key control method and system, a smart vehicle key and a non-transitory computer-readable storage medium.

### BACKGROUND

With the development of automobile technology and the improvement of keyless positioning technology, smart keys are rarely needed to be taken out for operation, and most smart keys are just carried around with you and have no other functions, which is a waste. The traditional voice assistants are fixed in the instrument panel (IP) of the car dashboard and only have voice functions, which are relatively simple.

### SUMMARY

The technical problem to be solved by the embodiments of the present application is to provide a vehicle smart key control method and system, and a vehicle smart key to expand the application range of the smart key.

In order to solve the above technical problem, the present application provides a vehicle smart key control method, including: detecting a position relationship between a smart key and a vehicle; the smart key setting an operation mode to a life companion mode if the smart key is outside a preset vehicle range,; detecting a passenger compartment region in which the smart key is located if the smart key is within the preset vehicle range; the smart key setting the operation mode to a driving companion mode according to detected passenger compartment region in which the smart key is located.

Furthermore, the smart key is respectively bound to a vehicle and a user, one or more smart keys are bound to a same vehicle, each smart key is uniquely bound to a user, and the smart key is configured with personalized information for identifying the user.

Furthermore, the smart key setting the operation mode to a driving companion mode according to detected passenger compartment region in which the smart key is located, comprises:
after detecting the smart key is located in a preset passenger compartment region, a vehicle-mounted system automatically reads personalized information of the smart key and stores the personalized information as a personalized role so that the vehicle-mounted system performs voice interaction with a user corresponding to the smart key in an identity of the personalized role.

Furthermore, the vehicle smart key control method further includes: constructing a passenger seating table or a passenger seating map based on a detection result of the passenger compartment region where the smart key is located

Furthermore, the vehicle-mounted system learns voices of different passengers in sequence according to the passenger seating table or the passenger seating map through microphones on different smart keys, to distinguish the voices of different passengers.

Furthermore, when the passengers located in different passenger compartment regions perform voice interaction through their smart keys, the vehicle-mounted system calls stored personalized roles according to the passenger seating table or the passenger seating map and uses a corresponding voice method to perform voice interaction.

Furthermore, the smart key is provided with a function switch, the function switch is pre-set with corresponding driving functions through a function arrangement method, the function arrangement method is input to the vehicle-mounted system for the user to operate the function switch to achieve the corresponding driving functions.

The present application further provides a vehicle smart key control system, the vehicle smart key control system is used to implement the vehicle smart key control method, the vehicle smart key control system includes a vehicle-mounted system and a smart key, the vehicle-mounted system is used to detect a position relationship between the smart key and the vehicle; if the smart key is outside a preset range of the vehicle, the smart key sets an operation mode to a life companion mode; if the smart key is within the preset range of the vehicle, the passenger compartment region where the smart key is located is detected; and according to a detected passenger compartment region where the smart key is located, the smart key sets the operation mode to a driving companion mode.

Furthermore, the smart key is provided with a function switch, the function switch is pre-set with corresponding driving functions through a function arrangement method, the function arrangement method is input to the vehicle-mounted system for the user to operate the function switch to achieve the corresponding driving functions.

The present application further provides a vehicle smart key, including: a positioning module, for providing positioning information of a smart key for a vehicle-mounted system to obtain a position relationship between the smart key and a vehicle; a mode setting module, for setting an operation mode of the smart key to a life companion mode when the smart key is outside a preset vehicle range; for setting the operation mode of the smart key to a driving companion mode according to the passenger compartment region where the smart key is located detected by the vehicle-mounted system when the smart key is within the preset vehicle range. A mode setting module, for setting an operation mode of the smart key to a life companion mode when the smart key is outside a preset vehicle range; for setting the operation mode of the smart key to a driving companion mode according to the passenger compartment region where the smart key is located detected by the vehicle-mounted system when the smart key is within the preset vehicle range.

The present application further provides a vehicle smart key, the vehicle smart key includes a processor and a memory, the processor is used to execute computer programs stored in the memory to implement the vehicle smart key control method.

The present application further provides a non-transitory computer-readable storage medium, the non-transitory computer-readable storage medium includes a stored computer program; when the computer program is running, the computer program controls a device where the non-transitory computer-readable storage medium is located to execute the vehicle smart key control method.

The implementation of the present application has the following beneficial effects: by designing a smart key, the smart key can be configured to switch to different operation modes according to the position relationship between the smart key and the vehicle; after the smart key enters the passenger compartment, it can detect the passenger compartment region in which it is located and start the driving companion mode accordingly, and in combination with the function of the vehicle's voice assistant, enable the user to interact with the vehicle, break through the functional limitations of the traditional vehicle key and bring a new experience to the user; the present application can not only save the number of switches on the vehicle itself, but also have the flexibility and wide range of use by setting function switches on the smart key; moreover, the smart key can be bound with the new vehicle offline after the user changes the vehicle, which solves the problem of the traditional vehicle-mounted voice assistant being bound by the vehicle, and reduces the cost of use for the user.

### BRIEF DESCRIPTION OF THE DRAWINGS

In order to more clearly illustrate the technical solutions in the embodiments or prior art of the present application, the following will briefly introduce the accompanying drawings that need to be used in the description of the embodiments or prior art, and it is obvious that the accompanying drawings in the following description are only some of the embodiments of the present application, and that for the person of ordinary skill in the field, other accompanying drawings can be obtained according to these drawings, without creative labor.
FIG. 1 is a flowchart of a vehicle smart key control method according to an embodiment of the present application.
FIG. 2 is a schematic diagram of a communication method between a smart key and a vehicle-mounted system according to an embodiment of the present application.
FIG. 3 is a schematic diagram of setting corresponding operation modes according to locating the smart key in different areas in an embodiment of the present application.

### DETAILED DESCRIPTION

Each of the following embodiments is described with reference to the accompanying drawings to illustrate specific embodiments in which the present invention may be implemented.

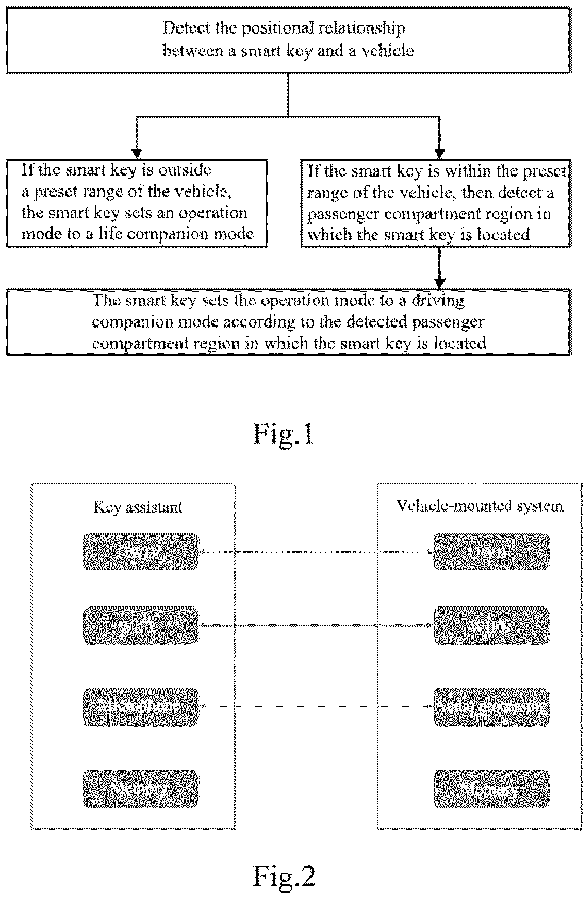

As shown in FIG. 1, the embodiment 1 of the present application provides a vehicle smart key control method, the method includes:
Detect the position relationship between a smart key and a vehicle;
If the smart key is outside a preset vehicle range, the smart key sets an operation mode to a life companion mode;
If the smart key is within the preset vehicle range, then detect a passenger compartment region in which the smart key is located;
The smart key sets the operation mode to a driving companion mode according to the detected passenger compartment region in which the smart key is located.

Specifically, in the embodiment, the smart key is implemented by combining hardware and software. The difference from the existing vehicle key is that the existing vehicle key only has a key function for unlocking and starting the vehicle, the smart key of the embodiment of the present application, in addition to realizing the functions of an ordinary vehicle key, also adds a function similar to a voice assistant. Moreover, the smart key of the embodiment is bound to the vehicle and the user respectively, the same vehicle can be bound to one or more smart keys, but each smart key is uniquely bound to a user, thereby establishing a relationship between the vehicle and the user through the smart key, so that the vehicle can identify different users by identifying different smart keys, and then execute the preset function corresponding to the user through the smart key.

When a smart key is activated offline, it is automatically equipped with normal vehicle key functions (e.g. unlocking, locking, starting the vehicle, etc.). The smart key can be connected to the corresponding cell phone APP of the vehicle manufacturer through wireless communication such as Bluetooth, the user configures personalized information and writes it into the smart key through the cell phone APP, such as: gender, name, age, favorite sport, favorite music, etc. The personalized information equipped with each smart key can be used to identify the user.

As shown in FIG. 2, there are various communication methods between the smart key and the vehicle-mounted system, for example, both can be used by the Ultra-Wideband (UWB) module to transmit data using pulses when positioning; both can be connected wirelessly and positioned through the WiFi module; voice can be inputted through a microphone on the smart key and transmitted to an audio processing module of the vehicle-mounted system, which can learn the user's voice and perform voice interaction (see later description). It is to be understood that the smart key and the vehicle-mounted system may also have other communication methods, such as Bluetooth.

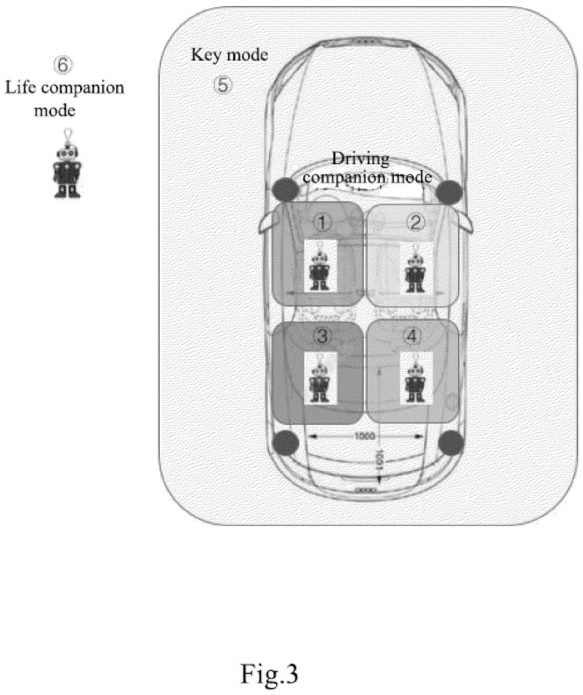

Please refer to FIG. 3, the position relationship between the smart key and the vehicle can be detected using UWB sensors or low-frequency sensors, when the smart key is detected to be outside a preset vehicle range (e.g., more than 10 meters away from the vehicle), the smart key receives the control commands sent by the vehicle-mounted system and automatically sets the operation mode of the smart key to the life companion mode, and at the same time, turns off modules related to the vehicle-mounted functions (e.g., WiFi module, microphone, etc.) to reduce power consumption. The life companion mode is a mode that performs non-vehicle functions, when the smart key sets the operation mode to life companion mode, the smart key can be used as an intelligent rehabilitation assistant, office assistant, home companion assistant, etc. When used as an intelligent rehabilitation assistant, when the user's body enters a disease state, the smart key can push corresponding behavior guidance according to the user's disease state, so that the user can recover as soon as possible; when used as an office assistant, one can be used as an eye-movement mouse, when the user needs to use the mouse for material/book reading in the vehicle or office, the mouse operation is provided by recognizing the user's eye movements, so as to facilitate the user's convenient and comfortable office; the second is used as a gesture mouse, when the user needs to use the mouse to carry out relatively complex operations in the vehicle (center console or rear screen), the office, the mouse operation is provided by recognizing the user's mouse ball movements, so as to facilitate the user's convenient office; when used as a home companion assistant, when the smart key is left at home as a remote monitoring terminal, the user can intelligently move the smart key to a focal position by clicking on a home map location, so as to facilitate the user to fully view the situation at home; when used as an outdoor camping assistant, music can be played through the smart key while camping. The life companion mode can be set by the user according to needs (such as the various assistants mentioned above), and all default settings can be used, it is only used as an ordinary vehicle key in the life companion mode; the embodiment of the present application does not limit this. It should be noted that if a plurality of users approach the vehicle with the smart key, the position relationship between each smart key and the vehicle will be detected separately, and the smart key has a plurality of communication interfaces such as low-frequency, Bluetooth, UWB, and other communication interfaces, which can feedback the positioning information to the vehicle, the positional detection is continuous, and the real-time position of the smart key is obtained as the smart key moves; the specific positioning method is not within the scope of the present application, the embodiments of the present application can adopt various existing positioning technologies, which will not be repeated here. In addition, when the smart key is detected to be within a preset vehicle range (e.g., within 10 meters from the vehicle), conventional authentication of the smart key is also performed to verify the binding of the smart key to the vehicle, this is not repeated here.

When the smart key is detected to be within the preset vehicle range, the passenger compartment region where the smart key is located is further detected. It is understandable that the passenger compartment can be pre-demarcated regions, such as the main driver region ①, the co-driver region ②, the rear left seat region ③ and the rear right seat region ④ shown in FIG. 3.

After detecting the passenger compartment region where the smart key is located, for example, a smart key 1 is located in the main driver region ①, a smart key 2 is located in the co-driver region ②, etc., the vehicle-mounted system sends the position detection result to the smart key, and the smart key sets the operation mode to the driving companion mode. It can be understood that the driving companion mode is a mode that performs the vehicle-mounted function. When the smart key sets the operation mode to the driving companion mode, the smart key can be used as a voice assistant for voice interaction with the user or voice control of the vehicle. Specifically, the vehicle-mounted system automatically reads the personalized information (as mentioned above, the personalized information has been pre-configured in the smart key) of the smart key located in the passenger compartment region through WiFi or Bluetooth and other means and stores it as a personalized role. Subsequently, the vehicle-mounted system interacts with the corresponding user through voice and other means under the identity of the personalized role. As mentioned above, the personalized information includes information such as the user's gender, age, favorite sports, etc., and the personalized role is a virtual image generated accordingly based on this information (for example, a young woman who loves running). In addition, the personalized information also includes information such as the user's favorite music (for example, light music, folk songs, etc.) and the vehicle-mounted system will play the user's favorite music when the user chooses to play music based on the read personalized information. The specific playing method can be that the vehicle-mounted system searches locally or downloads the corresponding music from the cloud based on the tags of the user's favorite music and plays it through the speaker.

Considering that in the embodiment, the same vehicle may be configured with a plurality of smart keys (e.g., each family member has a smart key), the user carrying the smart key into the passenger compartment region is not always fixed, for example, sometimes Zhang San sits in the main driver seat and Li Si sits in the co-driver seat, and sometimes Li Si sits in the main driver seat and Zhang San sits in the co-driver seat, and there are also instances in which a plurality of users carries their respective smart keys into the passenger compartment region; the embodiment of the present application will construct a passenger seating table or a passenger seating map based on the detection results of the smart key's access to different passenger compartment regions. The purpose of constructing the passenger seating table or the passenger seating map is to recognize passengers (who become passengers when the user enters the passenger compartment) located in different passenger compartment regions. By detecting the passenger compartment region where the smart key is located, it can be known in which passenger compartment region the smart key is located.

The vehicle-mounted system can learn the voices of different passengers in sequence according to the passenger seating table or the passenger seating map through the microphones on the different smart keys; the learning of the voices of the passengers is on-site learning, and after the learning, the vehicle-mounted system can differentiate between the voices of the different passengers, for example, only the voice of the owner can start the vehicle. It is understandable that voice learning can adopt various existing deep learning technologies.

When the passengers located in different passenger compartment regions make voice input through their smart keys, the vehicle-mounted system calls the corresponding personalized roles stored according to the passenger seating table and uses different voice methods to communicate; after learning the voice of the passenger, the personalized role communicates with the passenger in the same voice. The vehicle-mounted system can activate speakers in different regions to prevent interference with other seats. It should be noted that even if there are multiple passengers in the passenger compartment, since different passenger compartment regions have corresponding smart keys, the microphone inputs of different smart keys (i.e., the voices of different passengers) are different, the vehicle can also use distributed array microphones to distinguish different sound fields to avoid mutual influence.

As mentioned above, when Li Si carries Zhang San's smart key and sits in the main driver's seat originally occupied by Zhang San, it is recognized that Zhang San's smart key 1 is in the main driver region, and the original passenger seating table is main driver-Zhang San. When Li Si interacts with the vehicle-mounted system through the microphone of Zhang San's smart key 1, the vehicle-mounted system recognizes that Li Si's voice is inconsistent with the original main driver Zhang San, at this time, the vehicle-mounted system will learn Li Si's voice on the spot and update the original passenger seating table, update it to main driver-Li Si. In this way, when Li Si carries Zhang San's smart key and sits in the main driver's seat again in the future, Li Si can smoothly interact with the vehicle-mounted system through the microphone of Zhang San's smart key 1.

As a further improvement of the embodiment of the present application, a function switch can also be set on the smart key, by setting the corresponding function for the function switch in a function arrangement method and inputting it into the vehicle-mounted system, different driving-related functions can be realized; specifically, the function arrangement method is transmitted to the vehicle-mounted system in the form of a service that forms a mapping relationship with the relevant driving functions, when a specific function switch is operated, the vehicle-mounted system receives the instruction sent by the function switch, obtains the driving function that needs to be realized according to the mapping relationship, and then executes the driving function.

The example of function arrangement method is shown in the table below:
Main driver region - smart key switch 1 switch 2 switch 3 switch 4;
One- button start wiper switch headlight switch door lock switch;
Co-driver region - smart key switch 1 switch 2 switch 3 switch 4;
Switch music mode open sunroof air conditioner switch door lock switch.

Specifically, if the smart key is located in the main driver region, four function switches are provided thereon respectively: switch 1-one-button start, switch 2-wiper switch, switch 3-headlight switch, switch 4-door lock switch. The passengers in the main driver region only need to operate the function switches on the smart key to achieve the corresponding functions. For example, the passenger can turn on or off the wiper by operating the switch 2-wiper switch, and turn on or off the headlight by operating the switch 3-headlight switch, this can save a lot of switches in the vehicle itself, thereby expanding the usable space in the passenger compartment, especially in the instrument panel, central control and other regions, and providing more possibilities for the design of the vehicle passenger compartment. At the same time, due to the function arrangement method, the function switches on the smart key are not fixed and can be adjusted accordingly. For example, if a passenger who used to be the driver is changed to sit in the co-driver region, the function switches of the smart key can be rearranged as follows: switch 1-switch music mode, switch 2 - open the sunroof, switch 3-air conditioner switch, switch 4-door lock switch. In this way, the passenger can operate switch 2 to open or close the sunroof (when the passenger is in the main driver region, the wiper is turned on or off), and operate switch 3 to turn on or off the air conditioner (when the passenger is in the main driver region, the headlight is turned on or off). This function arrangement method of the function switch enhances the flexibility and versatility of the smart key's functions while saving the number of switches in the vehicle itself.

It is understandable that the function switch on the smart key can be a physical button or a virtual button on the touch screen and can be operated by the user to realize the corresponding function as described above, the embodiment of the present application does not limit the specific implementation form of the function switch. The vehicle-mounted system can be a vehicle-mounted entertainment host or a vehicle-mounted smart terminal equipped with an operating system, etc., which is not limited in the embodiment of the present application.

Corresponding to the vehicle smart key control method described in the embodiment 1 of the present application, embodiment 2 of the present application provides a vehicle smart key control system, which is used to implement the vehicle smart key control method described in the embodiment 1 of the present application, and the vehicle smart key control system includes a vehicle-mounted system and a smart key, and the vehicle-mounted system is used to detect the position relationship between the smart key and the vehicle through a vehicle-mounted sensor; if the smart key is outside a preset vehicle range, the operation mode of the smart key is set to the life companion mode; if the smart key is within the preset vehicle range, the passenger compartment region where the smart key is located is further detected through the vehicle-mounted sensor; and according to the detected passenger compartment region where the smart key is located, the operation mode of the smart key is set to the driving companion mode.

Optionally, the smart key is provided with a function switch, and the function switch is pre-set with corresponding driving functions through a function arrangement method, and the function arrangement manner is input to the vehicle-mounted system so that the user can realize the corresponding driving function by operating the function switch.

Embodiment 3 of the present application further provides a vehicle smart key, including:
A positioning module is used to provide positioning information of the smart key so that the vehicle-mounted system can obtain the position relationship between the smart key and the vehicle;
A mode setting module is used to set the operation mode of the smart key to the life companion mode when the smart key is outside a preset vehicle range; the mode setting module is used to set the operation mode of the smart key to the driving companion mode according to the passenger compartment region where the smart key is located detected by the vehicle-mounted system when the smart key is within the preset vehicle range.

Embodiment 4 of the present application further provides a vehicle smart key, the vehicle smart key includes a processor and a memory, the processor is configured to execute a computer program stored in the memory to implement the vehicle smart key control method.

Embodiment 5 of the present application also provides a non-transitory computer-readable storage medium, the non-transitory computer-readable storage medium includes a stored computer program; wherein, when the computer program is running, it controls the device where the non-transitory computer-readable storage medium is located to execute the vehicle smart key control method.

For the working principle and process of the above embodiment, please refer to the description of the embodiment 1 of the present application, which will not be repeated here.

It can be seen from the above description that compared with the prior art, the beneficial effects of the present application are: by designing a smart key, the smart key can be configured to switch to different operation modes according to the position relationship between the smart key and the vehicle; after the smart key enters the passenger compartment, it can detect the passenger compartment region in which it is located and start the driving companion mode accordingly, and in combination with the function of the vehicle's voice assistant, enable the user to interact with the vehicle, break through the functional limitations of the traditional vehicle key and bring a new experience to the user; the present application can not only save the number of switches on the vehicle itself, but also have the flexibility and wide range of use by setting function switches on the smart key; moreover, the smart key can be bound with the new vehicle offline after the user changes the vehicle, which solves the problem of the traditional vehicle-mounted voice assistant being bound by the vehicle, and reduces the cost of use for the user.

The above disclosure is only the preferred embodiment of the present application, which certainly cannot be used to limit the scope of the present application. Therefore, equivalent changes made according to the claims of the present application are still within the scope of the present application.

## Claims

1. A vehicle smart key control method, **characterized by** comprising:
detecting a position relationship between a smart key and a vehicle;
the smart key setting an operation mode to a life companion mode if the smart key is outside a preset vehicle range,
detecting a passenger compartment region in which the smart key is located if the smart key is within the preset vehicle range;
the smart key setting the operation mode to a driving companion mode according to detected passenger compartment region in which the smart key is located.

2. The vehicle smart key control method according to claim 1, wherein the smart key is respectively bound to a vehicle and a user, one or more smart keys are bound to a same vehicle, each smart key is uniquely bound to a user, and the smart key is configured with personalized information for identifying the user.

3. The vehicle smart key control method according to claim 1, wherein the smart key setting the operation mode to a driving companion mode according to detected passenger compartment region in which the smart key is located, comprises:
after detecting the smart key is located in a preset passenger compartment region, a vehicle-mounted system automatically reads personalized information of the smart key and stores the personalized information as a personalized role so that the vehicle-mounted system performs voice interaction with a user corresponding to the smart key in an identity of the personalized role.

4. The vehicle smart key control method according to claim 3, further comprising:
constructing a passenger seating table or a passenger seating map based on a detection result of the passenger compartment region where the smart key is located.

5. The vehicle smart key control method according to claim 4, wherein the vehicle-mounted system learns voices of different passengers in sequence according to the passenger seating table or the passenger seating map through microphones on different smart keys, to distinguish the voices of different passengers.

6. The vehicle smart key control method according to claim 5, wherein when the passengers located in different passenger compartment regions perform voice interaction through their smart keys, the vehicle-mounted system calls stored personalized roles according to the passenger seating table or the passenger seating map and uses a corresponding voice method to perform voice interaction.

7. The vehicle smart key control method according to claim 1, wherein the smart key is provided with a function switch, the function switch is pre-set with corresponding driving functions through a function arrangement method, the function arrangement method is input to the vehicle-mounted system for the user to operate the function switch to achieve the corresponding driving functions.

8. A vehicle smart key control system, **characterized in that** the vehicle smart key control system is configured to implement the vehicle smart key control method according to any one of claims 1 to 7, the vehicle smart key control system comprises a vehicle-mounted system and a smart key, the vehicle-mounted system is configured to detect a position relationship between the smart key and the vehicle; if the smart key is outside a preset range of the vehicle, the smart key sets an operation mode to a life companion mode; if the smart key is within the preset range of the vehicle, the passenger compartment region where the smart key is located is detected; and according to a detected passenger compartment region where the smart key is located, the smart key sets the operation mode to a driving companion mode.

9. The vehicle smart key control system according to claim 8, wherein the smart key is provided with a function switch, the function switch is pre-set with corresponding driving functions through a function arrangement method, the function arrangement method is input to the vehicle-mounted system for the user to operate the function switch to achieve the corresponding driving functions.

10. A vehicle smart key, **characterized by** comprising:
a positioning module is configured to provide positioning information of a smart key for a vehicle-mounted system to obtain a position relationship between the smart key and a vehicle;
a mode setting module is configured to set an operation mode of the smart key to a life companion mode when the smart key is outside a preset vehicle range; the mode setting module is configured to set the operation mode of the smart key to a driving companion mode according to the passenger compartment region where the smart key is located detected by the vehicle-mounted system when the smart key is within the preset vehicle range.

11. A vehicle smart key, **characterized by** comprising a processor and a memory, the processor is configured to perform a computer program stored in the memory to implement the vehicle smart key control method according to any one of claims 1-7.

12. A non-transitory computer-readable storage medium, **characterized in that** the non-transitory computer-readable storage medium comprises a stored computer program; when the computer program is running, the computer program controls a device where the non-transitory computer-readable storage medium is located to execute the vehicle smart key control method according to any one of claims 1-7.
